# EUROPÄISCHE PATENTSCHRIFT

(11) **EP 0 368 217 B1**
(45) Veröffentlichungstag und Bekanntmachung des Hinweises auf die Patenterteilung: **16.02.1994**
(21) Anmeldenummer: 89120525.4
(22) Anmeldetag: 06.11.1989
(51) Int. Cl.: C08F 220/28, C08F 220/58, C08F 216/14, C08F 222/20, C08F 218/10, C08F 226/00, C08F 299/02, C08G 18/40, C08G 18/62

(54) **Neue Copolymerisate und ihre Verwendung als Hilfsmittel und/oder Zusatzstoff in Formulierungen zur Herstellung von Polyisocyanat-Polyadditionsprodukten**
Copolymers and their use as auxiliary agents and/or adjuvants in formulations for preparing polyisocyanate-polyaddition products
Copolymères et leur usage comme produits auxiliaires et/ou adjuvants en formulations de préparation de produits de polyaddition de polyisocyanates

(30) Priorität: 09.11.1988 DE 3838031
(43) Veröffentlichungstag der Anmeldung: 16.05.1990
(73) Patentinhaber: BASF Aktiengesellschaft, 67063 Ludwigshafen (DE)
(72) Erfinder: Horn, Peter, Dr., D-6900 Heidelberg (DE); Rehmer, Gerd, Dr., D-6711 Beindersheim (DE); Lutter, Heinz-Dieter, Dr., D-6903 Neckargemuend (DE); Ramlow, Gerhard, Dr., D-6940 Weinheim (DE)

(56) Entgegenhaltungen:
- EP-A- 0 253 515
- GB-A- 2 170 812

## Beschreibung

Die Erfindung bezieht sich auf neue Copolymerisate, die hergestellt werden durch radikalische Copolymerisation von
A) mindestens einem olefinisch ungesättigten Polyoxyalkylenalkohol- oder Polyesteralkoholaddukt und
B) mindestens einem Vinylmonomeren aus der Gruppe N-Vinylformamid, -2-pyrrolidon, -2-piperidon, -2-caprolactam, -imidazol, -2-ethylenharnstoff und -2-propylenharnstoff sowie gegebenenfalls
C) mindestens einer α,β-monoolefinisch ungesättigten Säure und
D) mindestens einem olefinisch ungesättigten Carbonsäureamid und/oder -ester und/oder Styrol
und die Verwendung der Copolymerisate als Hilfsmittel und/oder Zusatzstoffe in Formulierungen zur Herstellung von Polyisocyanat-Polyadditionsprodukten.

Die Herstellung von kompakten oder zellhaltigen Polyisocyanat-Polyadditionsprodukten, wie z.B. von kompakten oder zelligen Polyurethan (pu)-Elastomeren und flexiblen, halbharten oder harten Polyurethan(PU)-Schaumstoffen, durch Umsetzung von organischen Polyisocyanaten und/oder modifizierten organischen Polyisocyanaten mit höhermolekularen Verbindungen mit mindestens zwei reaktiven Wasserstoffatomen, beispielsweise Polyoxyalkylen-polyaminen und/oder vorzugsweise organischen Polyhydroxylverbindungen mit Molekulargewichten von z.B. 500 bis 12 000 und gegebenenfalls Kettenverlängerungs- und/oder Vernetzungsmitteln mit Molekulargewichten bis ungefähr 500 in Gegenwart von Katalysatoren, Treibmitteln, Hilfsmitteln und/oder Zusatzstoffen ist bekannt aus zahlreichen Patent- und Literaturveröffentlichungen. Durch geeignete Wahl der Aufbaukomponenten Polyisocyanat, höhermolekularen Verbindungen mit reaktiven Wasserstoffatomen und gegebenenfalls Kettenverlängerungs- und/oder Vernetzungsmitteln können nach dieser Methode elastische oder starre, kompakte oder zellhaltige Polyisocyanat-Polyadditionsprodukte sowie alle dazwischen liegende Modifikationen hergestellt werden.

Eine Übersicht über die Herstellung von kompakten und Zelligen PU-Elastomeren, PU-Schaumstoffen und Polyisocyanurat(PIR)-Schaumstoffen, ihre mechanische Eigenschaften und ihre Verwendung wird beispielsweise in den Monographien High Polymers, Band XVI, "Polyurethanes", Teil I und II von J.H. Saunders und K.C. Frisch (Verlag Interscience Publishers, New York 1962 bzw. 1964), Kunststoff-Handbuch, Band VII, "Polyurethane", 1. Auflage 1966, herausgegeben von R. Vieweg und A. Höchtlen und 2. Auflage, 1983, herausgegeben von G. Oertel (Carl Hanser Verlag, München) und "Integralschaumstoffe ", herausgegeben von H. Piechota und H. Röhr (Carl Hanser Verlag, München, Wien 1975) gegeben.

Zur Herstellung von kompakten und insbesondere zellhaltigen Polyisocyanat-Polyadditionsprodukten, bei denen neben chemischen auch in erheblichem Maße kolloidchemische Vorgänge eine Rolle spielen, werden zweckmäßigerweise oberflächenaktive Hilfsmittel, wie z.B. Tenside, Dispergier- und/oder Emulgierhilfsmittel, Schaumstabilisatoren und/oder Zellregler eingesetzt.

Tenside bewirken durch ihre Emulgierwirkung eine gute Vermischung der Aufbaukomponenten und sorgen üblicherweise außerdem für die Stabilisierung des entstehenden Schaums und dessen gleichmäßige Beschaffenheit. Trotz zahlreicher Untersuchungen ist die Wirkungsweise der Schaumstabilisatoren bei der Schaumbildung noch nicht abschließend geklärt. Ihre Aufgabe besteht darin, den thermodynamisch instabilen Zustand eines Schaumes während des Steigvorgangs bis zu seiner Aushärtung durch Oberflächenkräfte aufrecht zu erhalten. Schaumstabilisatoren erniedrigen die Oberflächenspannung der Aufbaukomponentenmischung und wirken dadurch auch als Emulgator für das Gesamtsystem. Zellregler beeinflussen ebenfalls die Oberflächenspannungsverhältnisse der Schaummischung bei der Schaumstoffherstellung.

Andere Anwendungen dieser oberflächenaktiven Hilfsmittel liegen z.B. in der Verhinderung der Koaleszenz der Schaumblasen beim Aufschäumen, der Mitwirkung bei der Bildung der als Keimzellen wirkenden Gasbläschen und der Luftbeladung von nach dem RIM-Verfahren verarbeitbaren Reaktionsmischungen durch Stabilisierung der eingeschlagenen Luftbläschen.

Als oberflächenaktive Hilfsmittel wurden bereits Verbindungen mit den unterschiedlichsten chemischen Strukturen verwendet. Beispielhaft genant seien Polyoxypropylen-polyoxyethylen-Copolymere, langkettige Fettsäureester von Polyglykolen, oxethylierte Phenole, C₉-C₁₁-Oxoalkohole, Alkalistearate, Alkaliparaffinsulfonate, Polydimethylsiloxane u.a.. Am besten bewährt haben sich und daher vorzugsweise Anwendung finden Polyoxyalkylen-polydimethylsiloxan-Blockcopolymere, im folgenden kurz Silikone genannt.

Nachteilig an diesen Silikonen ist z.B., daß man sie in relativ großen Mengen, beispielweise in Mengen von 1 bis 2 Gew.-%, bezogen auf die Polyhydroxylverbindungen einsetzen muß; zum anderen stören sie bei einer eventuellen späteren Lackierung der zelligen Polyisocyanat-Polyadditionsprodukte, da sie eine gute Lackhaftung an der Formteiloberfläche verhindern.

In der Polyurethanchemie keine Seltenheit sind ferner Polyurethan-Formulierungen, die miteinander unverträgliche Polyole sowie gegebenenfalls Katalysatoren, Treibmittel, Hilfsmittel und/oder Zusatzstoffe enthalten und daher zur Phasentrennung neigen. Beispielhaft genannt seien Systeme aus höhermolekularen Polyhydroxylverbindungen und mit diesen unverträglichen Glykol-Kettenverlängerungsmitteln zur Herstellung von zelligen oder nichtzelligen Polyurethan-Elastomeren, z.B. für Schuhsohlen oder Weichintegralschaumstoffe, oder mit diesen Polyhydroxylverbindungen unverträglichen mindestens trifunktionellen, hydroxylgruppenhaltigen Vernetzern zur Herstellung von hochvernetzten, kompakten oder zelligen Polyurethan-Werkstoffen, wie z.B. zelligen oder kompakten Duromeren sowie Systeme aus Polyolen oder Polyolmischungen und mit diesen unverträglichen Zusatz- oder Hilfmitteln, wie z.B. festen oder flüssigen Stabilisatoren, Antioxidantien u.a..

Die Verwendung von Gemischen aus miteinander unverträglichen Polyolen ist teilweise nicht zu umgehen, wenn Polyurethan-Werkstoffe mit bestimmten mechanischen Eigenschaften angestrebt werden. Nach Angaben der DE-B-17 70 703 (US 3 558 529) sind auf diese Weise Polyurethan-Schaumstoffe zugänglich, die fast konstante lasttragende Eigenschaften über einen weiten Temperaturbereich zeigen. Nachteilig an derartigen Systemen ist jedoch, daß bereits kurzzeitige Lagerungen zur Auftrennung des Gemisches in 2 Phasen führt, so daß das System ständig gemischt werden muß, um ein konstantes Mischungsverhältnis der Komponenten bei der Verarbeitung zu gewährleisten.

Es sind daher bereits verschiedene Methoden beschrieben worden, Systeme aus miteinander unverträglichen Aufbaukomponenten zu homogenisieren. Beispielhaft genannt seien die EP-A-95 116 (US 4 518 521 und US 4 554 340) und EP-A-96 231 sowie der in diesen Patentpublikationen genannte Stand der Technik.

Aus der EP-A-95 116 sind lagerstabile, emulgatorfreie Polyolgemische mit hoher Misch-OH-Zahl und hohem Ethylenglykolgehalt bekannt aus höhermolekularen Polyoxyalkylen-polyolen der OH-Zahl 20 bis 210 mit mindestens 5 Gew.% überwiegend oder ausschließlich endständigen Oxyethylenblöcken in Abmischung mit Reaktionsprodukten, hergestellt aus Ethylenglykol und 0,1 bis 0,5 Mol Propylenoxid. Nach Angaben der EP-A-96 231 sind Glykol-Kettenverlängerungsmittel mit Gemischen aus bestimmten Polyoxypropylenpolyoxyethylen-polyolen mit mindestens 23 Gew.% Ethylenoxidresten vollständig mischbar.

Keine der vorgenannten Methoden hat jedoch zu einem technisch zufriedenstellenden Ergebnis geführt, da die Mischungen nur eine beschränkte, unzureichende Lagerbeständigkeit aufwiesen und/oder die Polyolkomponente mit der zwingend vorgeschriebenen Molekularstruktur die Variationsmöglichkeit zur Einstellung bestimmter Systemeigenschaften zu stark einschränken.

Zur Verminderung dieses Nachteils werden nach Angaben der deutschen Patentanmeldung P 38 24 055.6 zur Herstellung homogener Mischungen aus miteinander unverträglichen Polyolen der Polyolmischung ein Gemisch aus nichtionischen und ionischen Lösungsvermittlern einverleibt.

Die DE-A-37 18 935 (US 4 673 696) beschreibt lagerbeständige Gemische aus einem langkettigen Polyol und einem kurzkettigen Diol, denen zur Verhinderung der normalerweise bei der Lagerung eintretenden Phasentrennung ein ethylenisch ungesättigter Esteralkohol einverleibt wurde.

Aus der DE-C-22 44 350 (US-A-3 746 663) bekannt ist ein Verfahren zur Herstellung eines Polyurethanschaums aus üblichen Ausgangsstoffen, bei welchem man als Zellstabilisator ein Gemisch verwendet, das erhalten wurde durch Polymerisation von N-Vinylpyrrolidon, einer Mischung aus N-Vinylpyrrolidon und Dibutylmaleat oder einer Mischung aus N-Vinylpyrrolidon, Dibutylmaleat und Vinylacetat in bestimmten Mengenverhältnissen in einem flüssigen Polyether-polyol mit 2 bis 8 Hydroxylgruppen und einem Molekulargewicht von 150 bis 6500.

Ähnliche Stabilisatoren werden in der US-A-3 914 188 beschrieben. Das als Stabilisator wirksame Polymerisat wird in einem Polyoxyalkylen mit verkappten, gegenüber Isocyanatgruppen inerten Endgruppen durch Polymerisation von N-Vinyllactamen der Formel 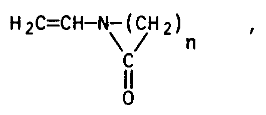
in der n = 3 bis 5 ist, oder durch Copolymerisation der genannten N-Vinyllactamen mit dem Ester einer ungesättigten Dicarbonsäure mit 4 oder 5 Kohlenstoffatomen hergestellt.

Nach Angaben der US-A-4 529 745 werden als Schaumstabilisatoren für PU- und PIR-Schaumstoffe Polymerisate verwendet, die hergestellt werden aus ungesättigten Polyoxyalkylenaddukten und ungesättigten Dicarbonsäurediestern durch Pfropfpolymerisation in Gegenwart von freie Radikale bildenden Initiatoren, wobei als ungesättigte Dicarbonsäurediester Fumarsäurediester in einer solchen Menge eingesetzt werden, daß mindestens 75 Gew.% der ungesättigten Dicarbonsäurediester aufgepfropft werden. Die ungesättigten Polyoxyalkylenaddukte werden vor oder nach der Pfropfpolymerisation zur Reduzierung der Hydroxylzahl von kleiner als 50 mit geeigneten Verbindungen verkappt.

Als die Porengröße kontrollierender Zusatz zur Herstellung von PU-Schaumstoffen werden in der DE-A-16 94 432 (US-A-3 484 392) Mischpolymerisate beschrieben, die erhalten werden durch Copolymerisation einer ungesättigten Verbindung A und zumindest einem Derivat B einer mono- oder diprotonisch ungesättigten Säure, welche mit der Verbindung (A) mischpolymerisierbar ist, wobei eine oder beide der Verbindungen (A) und (B) einen oder mehrere aliphatische Substituenten mit mindestens 4 Kohlenstoffatomen gebunden haben und wenigstens eine der Verbindungen (A) und (B) einen oder mehrere Polyoxyalkylenreste, die eine Alkyl-, Aryl-, Aralkyl- oder Acylgruppe als Endgruppe besitzen, aufweisen.

Da die Polyoxyalkylenendgruppen gegenüber Isocyanatgruppen weitgehend inert sind, eignen sich diese Stabilisatoren zur Herstellung von lagerfähigen Gemischen mit Polyisocyanaten.

Diese bekannten siliciumfreien Stabilisatoren ermöglichen die Herstellung von PU- und PIR-Schaumstoffen mit besser überlackier-, benetz- und verklebbaren Oberflächen. Verbessert wird ferner die Flammwidrigkeit der Schaumstoffe. Ein Nachteil der siliciumfreien Stabilisatoren gegenüber den siliciumorganischen Stabilisatoren beruht auf der verminderten Löslichkeit von Halogenkohlenwasserstoffen als Treibmittel in der Schaumstoff-Formulierung, die ihrerseits eine Verschlechterung der Isolierwirkung des gebildeten Schaumstoffs bewirken kann.

Zur Verbesserung der Flammwidrigkeit und der Isolierwirkung bei PU- und PIR-Schaumstoffen werden gemäß DE-B-37 24 717 als Schaumstabilisatoren Copolymerisate aus a) Vinylmonomeren auf Basis von Vinylcarboxylaten, Estern der Acryl- und Methacrylsäure oder Vinylpyrrolidon und b) Allyloder Methallylpolyoxyalkylenethern mit einem durchschnittlichen Molekulargewicht von 400 bis 5000 im Molverhältnis a:b der Monomeren von 1:1 bis 10:1 verwendet.

Nachteilig an diesen Copolymerisatstabilisatoren ist die anspruchsvolle Zugänglichkeit der (Meth)allylpolyoxyalkylenether, die bei unsachgemäßer Handhabung explosive Etherperoxide bilden können. Nachteilig ist ferner, die relativ einfache Bildung vernetzter Nebenprodukte bei der Herstellung.

Es bestand daher weiterhin ein dringendes technisches Interesse an homogenen, lagerstabilen Formulierungen für Polyisocyanat-Polyadditionsprodukte aus an sich miteinander unverträglichen höhermolekularen Polyolen und niedermolekularen Kettenverlängerungs- und/oder Vernetzungsmitteln oder lagerstabilen Dispersionen aus Feststoffen und Polyolen sowie gegebenenfalls Katalysatoren, Treibmitteln, Hilfsmitteln und/oder Zusatzstoffen, die nicht zur Phasentrennung und/oder Sedimentation, auch bei längeren Lagerzeiten, neigen und die obengenannten Nachteile ganz überwinden oder zumindest teilweise beseitigen.

Die Aufgabe der vorliegenden Erfindung bestand somit darin, Polymerisate oder Copolymerisate zu entwickeln, die sich als Dispergier- und/oder Emulgiermittel für Formulierungen zur Herstellung von Polyisocyanat-Polyadditionsprodukten eignen.

Diese Aufgabe konnte überraschenderweise gelöst werden mit Hilfe der erfindungsgemäßen, neuen Copolymerisate.

Gegenstand der Erfindung sind Copolymerisate mit einem K-Wert von 5 bis 80, vorzugsweise von 8 bis 60, besonders bevorzugt 10 bis 40 und insbesondere 12 bis 30, gemessen als 0,5 gew.%ige Lösung in Isopropanol bei 25°C (nach Fikentscher, Cellulosechemie 13 [1932], Seite 58), die hergestellt werden in Gegenwart von Polymerisationsinitiatoren durch radikalische Polymerisation von
A) 20 bis 80 Gew.%, vorzugsweise 25 bis 70 Gew.% und insbesondere 30 bis 55 Gew.%, bezogen auf das Gesamtgewicht der Monomeren (A) und (B), mindestens eines olefinisch ungesättigten Polyoxyalkylenalkohol-oder Polyesteralkoholaddukts,
B) 80 bis 20 Gew.%, vorzugsweise 75 bis 30 Gew.% und insbesondere 70 bis 45 Gew.%, bezogen auf das Gesamtgewicht der Monomeren (A) und (B), mindestens eines Vinylmonomeren ausgewählt aus der Gruppe N-Vinylformamid, -2-pyrrolidon, -2-piperidon, -2-caprolactam, -imidazol, -2-ethylenharnstoff und -2-propylenharnstoff,
C) 0 bis 10 Gew.-Teilen, vorzugsweise 0,1 bis 10 Gew.-Teilen und insbesondere 1 bis 7,5 Gew.-Teilen, bezogen auf 100 Gew.-Teile der Monomeren (A) und (B), mindestens einer α,β-monoolefinisch ungesättigten Säure und
D) 0 bis 30 Gew.-Teilen, vorzugsweise 0,1 bis 25 Gew.-Teilen und insbesondere 5 bis 20 Gew.-Teilen, bezogen auf 100 Gew.-Teile der Monomeren (A) und (B), mindestens eines olefinisch ungesättigten Carbonsäureamids und/oder -esters und/oder Styrol.

Nach bevorzugten Ausführungsformen bestehen die erfindungsgemäßen Copolymerisate aus
A) 20 bis 80 Gew.%, vorzugsweise 30 bis 55 Gew.%, bezogen auf das Gesamtgewicht von (A) und (B), des Monomeren (A),
B) 80 bis 20 Gew.%, vorzugsweise 70 bis 45 Gew.%, bezogen auf das Gesamtgewicht von (A) und (B), des Monomeren (B),
C) 0,1 bis 10 Gew.-Teilen, insbesondere 1 bis 7,5 Gew.-Teilen, bezogen auf 100 Gew.-Teile der Monomeren (A) und (B), einer olefinisch ungesättigten Säure (C), ausgewählt aus der Gruppe Acrylsäure, Methacrylsäure, Maleinsäure, Fumarsäure, Itaconsäure, Vinylsulfonsäure und Vinylphosphonsäure und
D) 0 bis 30 Gew.-Teilen, vorzugsweise 0,1 bis 25 Gew.-Teilen, bezogen auf 100 Gew.-Teile der Monomeren (A) und (B), des Monomeren (D).

Gegenstände der Erfindung sind ferner die Verwendung der neuen erfindungsgemäßen Copolymerisate als Dispergier- und/oder Emulgierhilfsmittel in Formulierungen zur Herstellung von Polyisocyanat-Polyadditionsprodukten oder als Additiv zur Verbesserung der mechanischen Eigenschaften der Polyisocyanat-Polyadditionsprodukte gemäß den Ansprüchen 6 bis 8 und ein Verfahren zur Herstellung von Polyisocyanat-Polyadditionsprodukten in Gegenwart dieser neuen Copolymerisate.

Die erfindungsgemäßen Copolymerisate enthalten als wesentliche Bestandteile polymerisierte Einheiten der olefinisch ungesättigten Polyoxyalkylenalkohol- oder Polyesteralkoholaddukte (A) und Vinylmonomeren (B). Durch Zusatz der Monomeren (C) und/oder (D) können die Copolymerisate gegebenenfalls modifiziert und auf diese Weise den speziellen Erfordernissen ihrer Verwendung angepaßt werden. Beispielsweise eignen sich Copolymerisate, die als wesentlichen Bestandteile polymerisierte Einheiten der Monomeren (A) und (B) sowie gegebenenfalls (D) gebunden haben, insbesondere als Dispergierhilfsmittel zur Herstellung stabiler Feststoff-Polyoldispersionen für PU-Weich- und PU-Hartschaumstoffe, als Emulgierhilfsmittel zur Bildung stabiler Emulsionen von inneren Formtrennmitteln in Polyolen für kompakte und zellige Polyurethan(PU)-Elastomere und als Additiv zur Minimierung des Schrumpfs bei PU-Elastomeren oder Schaumstoffen. Copolymerisate, die als wesentlichen Bestandteil polymerisierte Einheiten der Monomeren (A), (B) und (C) sowie gegebenenfalls (D) gebunden haben, finden hingegen insbesondere Verwendung als Dispergierhilfsmittel zur Herstellung stabiler Dispersionen von Feststoffen, z.B. von Melamin, in Polyolen für PU-Hart- und Weichschaumstoffe.

Die neuen Copolymerisate weisen daher den Vorteil auf, daß sie allgemein anwendbar sind und prinzipiell keine Einschränkungen in der Auswahl der Ausgangsstoffe für die Bildung von Formulierungen bzw. der daraus herstellbaren Polyadditionsprodukte auferlegen, wie dies bei den meisten Homogenisierungsverfahren entsprechend dem Stand der Technik der Fall ist. Die mechanischen Eigenschaften der hergestellten Endprodukte werden bei sachgerechter Anwendung als Dispergier- und/oder Emulgierhilfsmittel nicht bzw. nicht nennenswert beeinflußt. Überraschenderweise wurde bei Zusatz größerer Mengen, d.h. von mehr als 3 Gew.%, bezogen auf das Gewicht der höhermolekularen Polyole, eine Verbesserung des mechanischen Eigenschaftsniveaus der Polyisocyanat-Polyadditionsprodukte erzielt, wobei insbesondere die Schrumpfung bei der Formteilherstellung minimiert werden konnte. Erwähnenswert ist ferner die verbesserte Flammwidrigkeit bei PU-Weichschaumstoffen. Außerdem kann die Dichte von PU-Weichschaumstoffen in gewissen Grenzen vermindert werden, ohne daß das mechanische Eigenschaftsniveau der Schaumstoffe verschlechtert wird.

Zu den olefinisch ungesättigten Monomeren (A) bis (D) zur Herstellung der neuen Copolymerisate und zu den Aufbaukomponenten (a) bis (f) zur Herstellung der Polyisocyanat-Polyadditionsprodukte ist folgendes auszuführen:
Wie bereits dargelegt wurde, enthalten die neuen Copolymerisate als erfindungswesentliche Bestandteile polymerisierte Einheiten von olefinisch ungesättigten Polyoxyalkylenalkohol- oder Polyesteralkoholaddukten (A) und den ausgewählten Vinylmonomeren (B) sowie in Abhängigkeit von der Art ihrer Verwendung gegebenenfalls polymerisierte Einheiten eines oder mehrerer der Monomeren (C) und/oder (D).
A. Als olefinisch ungesättigte Polyoxyalkylenalkohol- oder Polyesteralkoholaddukte (A) eignen sich Monomere der Formeln (I) bis (VIII) 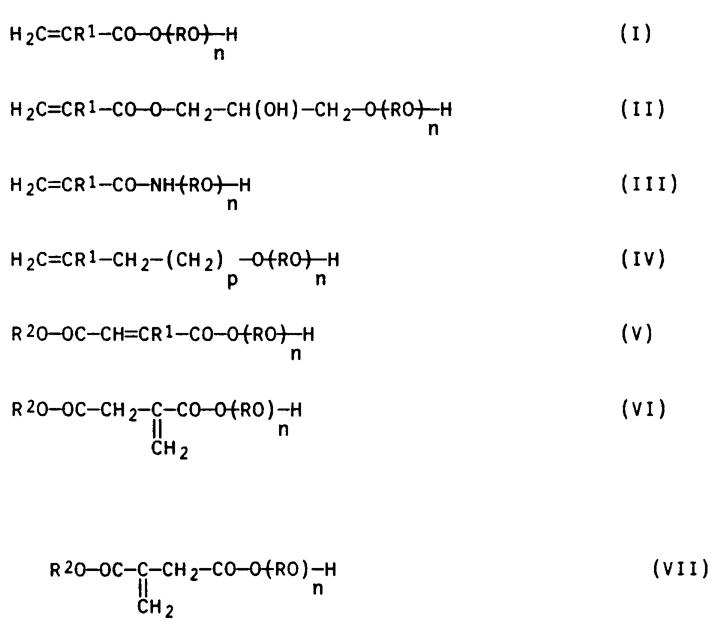 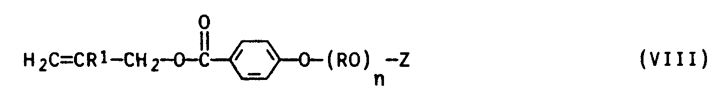 in denen bedeuten:
   - R¹ und R²: jeweils ein Wasserstoffatom oder eine lineare oder verzweigte Alkylgruppe mit 1 bis 4 Kohlenstoffatomen, beispielsweise eine Methyl-, Ethyl-, n- oder iso-Propyl- und n- oder sek-Butylgruppe, wobei die Reste R¹ und R² gleich oder verschieden sein können und R¹ vorzugsweise Wasserstoff oder eine Methylgruppe und R² vorzugsweise Wasserstoff, eine Methyl- oder Ethylgruppe sind,
   - R: gleiche oder verschiedene Brückenglieder der Formeln
   -CH₂CH₂- , -CH₂-CH(CH₃)- , 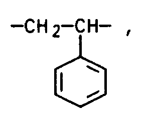 -CH₂CH₂CH₂CH₂-
   oder -CO-(CH₂)ₘ-O-, wobei m eine ganze Zahl von 1 bis 10, vorzugsweise 2 bis 6 ist,
   - Z: ein Wasserstoffatom, einen linearen oder verzweigten Alkylrest mit 1 bis 24 Kohlenstoffatomen, vorzugsweise 4 bis 18 Kohlenstoffatomen, einen Arylrest, vorzugsweise eine Phenylgruppe oder einen alkylsubstituierten Arylrest, vorzugsweise eine mit C₁-C₂₄-Alkyl, insbesondere C₄-C₁₈-Alkyl substituierte Phenylgruppe, wie z.B. die p-Decylphenylgruppe,
   - n: eine ganze Zahl von 2 bis 200, vorzugsweise von 10 bis 100 und
   - p: eine ganze Zahl von 1 bis 18, vorzugsweise von 1 bis 10.

   (̵RO)̵ₙ- sind somit Einheiten aus polymerisiertem Styroloxid, Tetrahydrofuran, 1,2-Propylenoxid oder Ethylenoxid oder gemischte Einheiten aus diesen Alkylenoxiden, wobei die Einheiten statistisch oder blockweise gebunden sein können und unterschiedliche Alkoxilierungsgrade aufweisen können. Vorzugsweise Anwendung finden Polyoxyethylen-, Polyoxypropylen- und Polyoxypropylen-polyoxyethylen-Einheiten. Als Reste (̵RO)̵ₙ- eignen sich ferner polymerisierte Caprolactone.
   Zur Bildung der olefinisch ungesättigten Polyoxyalkylenalkohol- oder Polyesteralkoholaddukte (A) können die entsprechenden Polyoxyalkylenglykole oder Polyester-diole mit olefinisch ungesättigten Mono- oder Dicarbonsäuren oder deren Derivate, wie z.B. Anhydride, Mono- und/oder Dialkylester, in den entsprechenden Molverhältnissen verestert oder umgeestert werden. Nach einer anderen Methode können die olefinisch ungesättigten Monocarbonsäuren, Monoester von olefinisch ungesättigten Dicarbonsäuren, die entsprechenden Carbonsäureamide oder olefinisch ungesättigten Alkohole, wie z.B. 2-Methylbutenol, alkoxiliert, vorzugsweise ethoxiliert und/oder propoxiliert werden und danach die endständigen Hydroxylgruppen, z.B. mit Alkyl- oder Arylhalogeniden, gegebenenfalls verethert werden. Als olefinisch ungesättigte Carbonsäuren oder Alkohol finden insbesondere Acrylsäure, Methacrylsäure, Maleinsäure, Fumarsäure, Itaconsäure sowie die Monoalkylester der genannten Dicarbonsäuren und 2-Methylbutenol Verwendung. Insbesondere bevorzugt weisen die olefinisch ungesättigten Addukte (A) mit NCO-Gruppen reaktive Reste, insbesondere eine Hydroxylgruppe, auf. Sie können einzeln oder in Form von Mischungen verwendet werden.
B. Als geeignete Vinylmonomeren (B) kommen in Betracht: N-Vinyl-formamid, -2-pyrrolidon₇ -2-piperidon, -2-caprolactam, -imidazol, -2-ethylenharnstoff und -2-propylenharnstoff. Besonders bewährt hat sich und daher vorzugsweise Anwendung findet N-Vinyl-pyrrolidon. Die N-Vinylmonomeren (B) können ebenso wie die Monomeren (A) einzeln oder als Gemische eingesetzt werden.
C. Als Monomer (C) werden in Abhängigkeit von der Verwendung der erfindungsgemäßen Copolymerisate gegegebenenfalls mindestens eine α,β-monoolefinisch ungesättigte Säure, vorzugsweise eine Mono- und/oder Dicarbonsäure mit 3 bis 6 Kohlenstoffatomen und/oder die Monoalkylester von 4 bis 6 Kohlenstoffatomen enthaltenden Dicarbonsäuren mit 1 bis 24 Kohlenstoffatomen, vorzugsweise 4 bis 8 Kohlenstoffatomen enthaltenden linearen oder verzweigtkettigen Alkanolen, copolymerisiert. Anstelle der Dicarbonsäuren oder im Gemisch mit diesen können auch die entsprechenden Anhydride eingesetzt werden. Als geeignete Säuren seien beispielhaft genannt: olefinisch ungesättigte Sulfonsäuren oder Phosphorsäuren, vorzugsweise Vinylsulfonsäure oder Vinylphosphonsäure, Mono- oder Dicarbonsäuren, z.B. Crotonsäure, vorzugsweise Acrylsäure, Methacrylsäure, Maleinsäure, Fumarsäure und Itaconsäure, Carbonsäureanhydride, z.B. Maleinsäure-, Itaconsäureanhydrid und (Meth)acrylsäureanhydrid und Monoalkylester von Dicarbonsäuren wie z.B Monomethyl-, -butyl-, -2-ethylhexyl-, -iso-amyl-, -iso-octyl- oder -stearylmaleinat.
   Sofern die Monomeren (C) Anwendung finden, können sie, wie bereits ausgeführt wurde, einzeln oder in Form von Mischungen verwendet werden.
D. Zur Herstellung der erfindungsgemäßen neuen Copolymerisate können gegebenenfalls als zusätzliches Monomer Styrol und/oder olefinisch ungesättigte Carbonsäureamide und/oder Carbonsäureester verwendet werden, wobei vorzugsweise Carbonsäurevinylester und/oder die Amide und Ester der Acryl- und Methacrylsäure Anwendung finden. In Betracht kommen beispielsweise N,N-Dialkylacrylamide, N,N-Dialkylmethacrylamide, N-Alkylacrylamide und N-Alkylmethacrylamide mit 1 bis 12 Kohlenstoffatomen, vorzugsweise 1 bis 4 Kohlenstoffatomen im Alkylrest, wie z.B. N,N-Dimethyl-, N,N-Diethyl-, N,N-Diisopropyl-, N,N-Dibutyl-(meth)acrylamid, N-Methyl-, N-n-Propyl-, N-iso-Propyl-, N-tert-Butyl-, N-tert.-Hexyl-, N-Cyclohexyl-, N-tert.-Octyl- und N-1-Methylundecyl(meth)acrylamid, N-Benzyl(meth)acrylamid, N-Isobornyl(meth)acrylamid und Diaceton(meth)acrylamid, Acrylamid und Methacrylamid, Carbonsäurevinylester mit 1 bis 20 Kohlenstoffatomen, vorzugsweise 2 bis 8 Kohlenstoffatomen im Alkanoylrest, wie z.B. Vinylacetat, -propionat, -2-ethylhexanat, -laurat und -stearat, Alkylacrylate und/oder Alkylmethacrylate mit 1 bis 24 Kohlenstoffatomen, vorzugsweise 1 bis 18 Kohlenstoffatomen im Alkylrest, wie z.B. Methyl-, Ethyl-, n-Propyl-, iso-Propyl-, n-, iso- und tert.-Butyl-, 2-Ethylhexyl-, Amyl-, iso-Amyl-, iso-Octyl-, Decyl-, Lauryl-, Stearylacrylat und/oder -methacrylat sowie Cyclohexylacrylat und/oder -methacrylat, Hydroxyalkylacrylate und -methacrylate mit 2 bis 10 Kohlenstoffatomen, vorzugsweise 2 bis 6 Kohlenstoffatomen im Hydroxyalkylrest, wie z.B. Hydroxyethyl-, 2-Hydroxypropyl- und 4-Hydroxybutylacrylat und/oder -methacrylat, N,N-Dialkylaminoalkyl(meth)acrylate, wie z.B. N,N-Diethylaminoethyl(meth)acrylat und N,N-Dimethylaminoethyl(meth)acrylat sowie N-Methylolether(meth)acrylamide mit 1 bis 12 Kohlenstoffatomen im linearen oder verzweigten Methyloletherrest.

Die Herstellung der erfindungsgemäßen Copolymerisate kann mittels Substanz-, Lösungs- oder Emulsionspolymerisation unter Verwendung geeigneter Polymerisationsinitiatoren durchgeführt werden. Derartige Polymerisationsverfahren sind bekannt und werden beispielsweise beschrieben in der EP-A-0 039 797, EP-A-003 516 (US-A-4 250 070) und DE-A-25 26 747 (GB-A-1 546 144), so daß die Copolymerisate analog den dort beschriebenen Herstellungsverfahren erhältlich sind. Die Copolymerisation in Lösung wird hierzu bevorzugt angewandt.

Für die Copolymerisation in Lösung können die üblichen Lösungsmittel wie z.B. Kohlenwasserstoffe, wie Benzol, Toluol, o-, m-, p-Xylol, Ethylbenzol, Benzine, n-Hexan, Cyclohexan, Ester wie Ethylacetat, Alkohole wie Ethanol, Methanol, iso-Propanol, Ether wie Dioxan, Tetrahydrofuran, sowie Gemische aus den genannten Lösemitteln verwendet werden.

Die Menge des Polymerisationsinitiators beträgt im allgemeinen 0,01 bis 7 Gew.%, bezogen auf die Summe der Gewichte der Monomeren (A) und (B).

Geeignete Polymerisationsinitiatoren sind z.B. 2,2'-Azobisisobutyronitril (Porofor® N), Dimethyl-2,2'-azobisisobutyrat (V 601, Fa. Wako), 4,4'-Azobis-(4-cyanvaleriansäure), Perester wie tert.-Butylperpivalat, tert.-Butylperoctoat, tert.-Butylperbenzoat, Peroxide wie Dibenzoylperoxid und Dilauroylperoxid, Hydroperoxide wie Cumolhydroperoxid sowie Peroxidicarbonate wie Dicyclohexylperoxidicarbonat, Ketonperoxide wie Methylethylketonperoxid, Cyclohexanonperoxid.

Die genannten Initiatoren können für sich allein oder gemeinsam verwendet werden.

Für die Durchführung der Copolymerisation können auch den Polymerisationsgrad senkende Verbindungen dem Reaktionsgemisch zugesetzt werden. Hierfür werden u.a. Mercaptane, wie z.B. Mercaptoethanol, Mercaptobernsteinsäure, Mercaptopropionsäure, Mercaptoglycerin, 3-Mercaptopropyltrimethoxysilan, 3-Mercaptopropyl-methyl-dimethoxysilan, Benzolderivate wie z.B. Isopropylbenzol, Diisopropylbenzol, Isopropylbenzaldehyd oder Ketone, wie z.B. Methylisopropylketon eingesetzt. Diese Polymerisationsregler werden dabei in Mengen von 0 bis 10 Gew.%, bezogen auf die Summe der Gewichte der Monomeren (A) und (B) zugesetzt.

Die erfindungsgemäßen Copolymerisate werden vorzugsweise ohne die Mitverwendung der oben angeführten Polymerisationsregler hergestellt.

Für die Durchführung der Copolymerisation in Lösung wird meist ein Teil oder das gesamte Lösungsmittel mit einem Teil des Monomerengemisches und einem Teil oder der gesamten Menge des Polymerisationsinitiators erwärmt. Es wird der Beginn der Copolymerisation abgewartet und der Rest des Monomerengemisches und gegebenenfalls der Rest des Polymerisationsinitiators und gegebenenfalls noch Lösungsmittel zugefügt. Die Copolymerisation erfolgt zweckmäßigerweise in hochkonzentrierter Lösung, vorzugsweise bei Monomerkonzentrationen von über 40 Gew.%, besonders bevorzugt von über 65 Gew.% und insbesondere von über 80 Gew.%, bezogen auf das Gesamtgewicht der Reaktionsmischung.

Die Copolymerisation wird zweckmäßigerweise bei Temperaturen von 50 bis 230°C, vorzugsweise von 70 bis 120°C unter Normaldruck oder erhöhtem Druck, z.B. bei 1 bis 100 bar, vorzugsweise 1 bis 15 bar durchgeführt.

Zur Isolierung der erfindungsgemäßen Copolymerisate wird das Lösemittel oder Lösemittelgemisch nach beendeter Copolymerisation bei erhöhter Temperatur abdestilliert. Lösemittelreste und gegebenenfalls andere flüchtige Bestandteile werden unter vermindertem Druck, z.B. von 500 bis 20 mbar bei Temperaturen von 80 bis 150°C abgetrennt. Die Abtrennung der Lösemittel und flüchtigen Bestandteile kann direkt aus dem Polymerisationsgefäß heraus erfolgen. Die Copolymerisatlösung kann jedoch auch, gegebenenfalls nach einer Aufkonzentrierung, einem Entgasungsgerät zugeführt und dort entgast werden.

Nach einer anderen Methode können nach beendeter Copolymerisation der Reaktionsmischung ausgewählte Aufbaukomponenten zur Herstellung der Polyisocyanat-Polyadditionsprodukte einverleibt werden und danach das Lösemittel sowie gegebenenfalls die flüchtigen Bestandteile, beispielsweise durch fraktionierte Destillation, abgetrennt werden.

Die erfindungsgemäßen neuen Copolymerisate finden Verwendung als Dispergierhilfsmittel und/oder Emulgierhilfsmittel in Formulierungen oder deren Teilmischungen, z.B. in den Komponenten (A) und/oder (B), zur Herstellung von Polyisocyanat-Polyadditionsprodukten und/oder als Additiv zur Verbesserung der mechanischen Eigenschaften von aus diesen Formulierungen hergestellten Polyisocyanat-Polyadditionsprodukten. Die Copolymerisate eignen sich ferner als Additiv in Formulierungen zur Herstellung von praktisch schrumpffreien Formteilen auf der Grundlage von Urethangruppen oder Urethan- und Harnstoffgruppen enthaltenden Elastomeren oder Schaumstoffen.

Anwendung finden sie außerdem als Dispergierhilfsmittel zur Herstellung lagerstabiler Dispersionen aus mindestens einem pulverigen Feststoff, vorzugsweise Melamin, und mindestens einem bei 25°C flüssigen Polyester- und/oder Polyether-polyol.

Zur Herstellung der Polyisocyanat-Polyadditionsprodukte werden in an sich bekannter weise
a) organische Polyisocyanate und/oder modifizierte organische Polyisocyanate mit
b) höhermolekularen Verbindungen mit mindestens zwei reaktiven Wasserstoffatomen und gegebenenfalls
c) Kettenverlängerungs- und/oder Vernetzungsmitteln in Gegenwart von
d) Katalysatoren,
e) Hilfsmitteln und/oder Zusatzstoffen sowie
in Gegenwart oder Abwesenheit von
f) Treibmitteln
zur Reaktion gebracht. Erfindungsgemäß werden hierzu als Hilfsmittel und/oder Zusatzstoffe (e) die neuen Copolymerisate nach einem der Ansprüche 1 bis 6 verwendet.

Zu den Aufbaukomponenten (a) bis (f) zur Herstellung der kompakten oder zelligen Polyisocyanat-Polyadditionsprodukte, vorzugsweise der Urethan- oder Urethan- und Isocyanuratgruppen enthaltenden Schaumstoffe oder zelligen oder kompakten Urethan-, Harnstoff- oder Urethan- und Harnstoffgruppen enthaltenden Elastomeren ist folgendes auszuführen:
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatischen Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 800 modifiziertes 4,4'-Diphenylmethan-diisocyanat oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 9 Gew.%, vorzugsweise von 21 bis 14 Gew.%, bezogen auf das Gesamtgewicht, hergestellt aus den nachfolgend beschriebenen Polyester- und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylendiisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylendiisocyanat.
   Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.
   Besonders bewährt haben sich als organische Polyisocyanate und kommen daher vorzugsweise zur Anwendung zur Herstellung von zelligen Elastomeren: NCO-Gruppen enthaltende Prepolymere mit einem NCO-Gehalt von 25 bis 9 Gew.%, insbesondere auf Basis von Polyether- oder Polyester-polyolen und einem oder mehreren Diphenylmethan-diisocyanat-Isomeren, vorteilhafterweise 4,4'-Diphenylmethan-diisocyanat und/oder modifizierte Urethangruppen enthaltende organische Polyisocyanate mit einem NCO-Gehalt von 33,6 bis 15 Gew.%, insbesondere auf Basis von 4,4'-Diphenylmethan-diisocyanat oder Diphenylmethan-diisocyanat-Isomerengemischen, zur Herstellung von flexiblen Polyurethanschaumstoffen: Mischungen aus 2,4- und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI und zur Herstellung von Polyurethan- oder Polyurethan-Polyisocyanurat-Hartschaumstoffen: Roh-MDI.
b) Als höhermolekulare Verbindungen b) mit mindestens zwei reaktiven Wasserstoffatomen werden zweckmäßigerweise solche mit einer Funktionalität von 2 bis 8, vorzugsweise 2 bis 4 und einem Molekulargewicht von 800 bis 8000, vorzugsweise von 1200 bis 6000 verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3 und ein Molekulargewicht von 800 bis 3000, vorzugsweise 1200 bis 3000 und insbesondere 1800 bis 2500.
   Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und mindestens einem Startermolekül, das 2 bis 8, vorzugsweise 2 bis 4 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.
   Die Polyether-polyole besitzen eine Funktionalität von vorzugsweise 2 bis 4 und insbesondere 2 und 3 und Molekulargewichte von 800 bis 8000, vorzugsweise 1200 bis 6000 und insbesondere 1800 bis 4000.
   Als Polyether-polyole eignen sich ferner Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden. Anstelle der genannten Polyether-polyole und/oder Pfropf-polyether-polyole können auch andere polymermodifizierte Polyether-polyole oder Mischungen aus Polyether-polyolen und polymermodifizierten Polyether-polyolen Anwendung finden. Geeignete polymermodifizierte Polyether-polyole enthalten zweckmäßigerweise 2 bis 50 Gew.%, vorzugsweise 3 bis 25 Gew.%, bezogen auf das Gesamtgewicht, anorganische Füllstoffe, wie z.B. Kaolin oder Aluminiumoxid, organische Füllstoffe, wie z.B. Ruß, Kollophonium, Melamin, Cyanursäurederivate oder Polymerpartikel, wobei die Polymerpartikel vorzugsweise ausgewählt sind aus der Gruppe der Polyharnstoffe, Polyhydrazide, tert.-Aminogruppen enthaltende Polyurethane, Polyolefine, Polyacrylnitrile und Polyvinylchloride. Derartige polymermodifizierte Polyether-polyole und Verfahren zu ihrer Herstellung sind z.B. bekannt aus der EP-B-0 011 752 (US 4 304 708), US-A-4 374 209 und DE-A-32 31 497. Die Polyether-polyole können ebenso wie die Polyesterpolyole einzeln oder in Form von Mischungen verwendet werden. Ferner können sie mit den Pfropf-polyether-polyolen oder Polyester-polyolen sowie den hydroxylgruppenhaltigen Polyesteramiden, Polyacetalen, Polycarbonaten und/oder Polyether-polyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnen, vorwiegend linearen Kondensate.
   Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373).
c) Die Polyisocyanat-Polyadditionsprodukte und vorzugsweise die genannten Schaumstoffe und kompakten oder zelligen Elastomeren können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemische davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Zur Herstellung zelliger Polyurethan-Polyharnstoff-Elastomerer können neben den obengenannten Diolen und/oder Triolen oder im Gemisch mit diesen als Kettenverlängerungs- oder Vernetzungsmittel auch sekundäre aromatische Diamine, primäre aromatische Diamine, 3,3'-di- und/oder 3,3', 5,5'-tetraalkylsubstituierte Diamino-diphenylmethane Anwendung finden.
   Als sek. aromatische Diamine seine beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek-pentyl-, N,N'-Di-sek-hexyl-, N,N'-Di-sek-decyl-, N,N'-Dicyclohexyl-p- bzw. -m-Phenylendiamin, N,N'-Dimethyl-, N,N'-Diethyl-, N,N'-Diisopropyl-, N,N'-Di-sek-butyl-, N,N'-Dicyclohexyl-4,4'-diaminodiphenylmethan und N,N'-Di-sek-butyl-benzidin.
   Als aromatische Diamine werden zweckmäßigerweise solche verwendet, die in ortho-Stellung zu den Aminogruppen mindestens einen Alkylsubstituenten besitzen, bei Raumtemperatur flüssig und mit der Komponente (b), insbesondere den Polyether-polyolen, mischbar sind. Bewährt haben sich ferner alkylsubstituierte meta-Phenylendiamine der Formeln 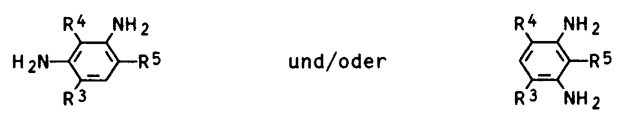 in denen R³ und R⁴ gleich oder verschieden sind und einen Methyl-, Ethyl-, Propyl- und Isopropylrest bedeuten und R⁵ ein linearer oder verzweigter Alkylrest mit 1 bis 10, vorzugsweise 4 bis 6 Kohlenstoffatomen ist. Insbesondere bewährt haben sich solche Alkylreste R⁵, bei denen die Verzweigungsstelle am C¹-Kohlenstoffatom sitzt. Als Reste R⁵ seien beispielhaft genannt: der Methyl-, Ethyl-, Isopropyl-, 1-Methyl-octyl-, 2-Ethyl-octyl-, 1-Methyl-hexyl-, 1,1-Dimethylpentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propyl-Rest.
   Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-, 2,4-Dimethyl-6-(1,1-dimethyl-n-propyl)-, 2-(1-Methyl-n-butyl)-4,6-dimethylphenylendiamin-1,3. Vorzugsweise verwendet werden 1-Methyl-3,5-diethyl-2,4- bzw. -2,6-phenylendiamine, 2,4-Dimethyl-6-tert.butyl-, 2,4-Dimethyl-6-isooctyl-und 2,4-Dimethyl-6-cyclohexyl-m-phenylendiamin-1,3.
   Geeignete 3,3'-di- und 3,3',5,5'-tetra-n-alkylsubstituierte 4,4'-Diamino-diphenylmethane sind beispielsweise 3,3'-Di-,3,3',5,5'-Tetramethyl-, 3,3'-Di-,3,3',5,5'-Tetraethyl-, 3,3'-Di-, und 3,3',5,5'-Tetra-n-propyl-4,4'-diaminodiphenylmethan.
   Vorzugsweise verwendet werden Diamino-diphenylmethane der Formel 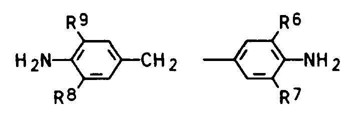 in der R⁶, R⁷, R⁸ und R⁹ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die 4,4'-Diamino-diphenylmethane können auch im Gemisch mit Isomeren der Formeln 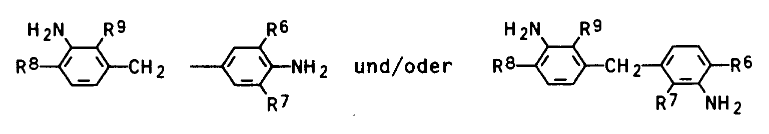 verwendet werden, wobei R⁶, R⁷, R⁸ und R⁹ die obengenannte Bedeutung haben.
   Vorzugsweise verwendet werden 3,5-Dimethyl-3',5'-diisopropyl- und 3,3',5,5'-Tetraisopropyl-4,4'-diamino-diphenylmethan. Die Diamino-diphenylmethane können einzeln oder in Form von Mischungen eingesetzt werden.
   Die genannten Kettenverlängerungsmittel und/oder Vernetzungsmittel (c) können einzeln oder als Mischungen von gleichen oder verschiedenen Arten verwendet werden.
   Sofern Kettenverlängerungsmittel, Vernetzungsmittel oder Mischungen davon Anwendung finden, kommen diese zweckmäßigerweise in Mengen von 2 bis 60 Gew.%, vorzugsweise 8 bis 50 Gew.% und insbesondere 10 bis 40 Gew.%, bezogen auf das Gewicht der Komponenten (b) und (c) zum Einsatz.
d) Als Katalysatoren (d) werden insbesondere Verbindungen verwendet, die die Reaktion der Hydroxylgruppen enthaltenden Verbindungen der Komponenten (b) und (c) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination bezogen auf das Gewicht der Komponente (b).
e) Erfindungsgemäß werden zur Herstellung der Polyisocyanat-Polyadditionsprodukte als Hilfsmittel und/oder Zusatzstoffe die neuen Copolymerisate nach einem der Ansprüche 1 bis 6 verwendet. Hierbei werden je nach Art des Verwendungszwecks und nach der Struktur des Copolymerisats, beispielsweise werden Copolymerisate mit einpolymerisierten Polyesteralkoholaddukten bevorzugt in Verbindung mit Polyester-polyolen und Copolymerisate mit einpolymerisierten Polyoxyalkylenalkoholaddukten bevorzugt in Verbindung mit Polyether-polyolen angewandt, in unterschiedlichen Mengen eingesetzt. Werden die Copolymerisate als Dispergier- und/oder Emulgierhilfsmittel verwendet, so sind üblicherweise 0,01 bis 5 Gew.%, vorzugsweise 0,1 bis 2 Gew.%, bezogen auf das Gewicht der höhermolekularen Verbindungen mit mindestens 2 reaktiven Wasserstoffatomen (b) ausreichend. Werden die erfindungsgemäßen Copolymerisate in Kombination mit anderen oberflächenaktiven Verbindungen verwendet, die ebenfalls einen Dispergier- und/oder Emulgiereffekt zeigen, so werden die genauen Mengen zweckmäßigerweise durch einfache Versuche ermittelt. Zur Verbesserung der mechanischen Eigenschaften der hergestellten Polyisocyanat-Polyadditionsprodukte werden üblicherweise 3 bis 15 Gew.% und insbesondere 4 bis 10 Gew.% Copolymerisat, bezogen auf das Gewicht der höhermolekularen Verbindung (b) eingesetzt. Zur Verhinderung oder Minimierung des Schrumpfs bei der Herstellung von Formteilen finden zweckmäßigerweise 2 bis 15 Gew.%, vorzugsweise 3 bis 11 Gew.%, bezogen auf das Gewicht der höhermolekularen Verbindung (b) Anwendung.
   Zusätzlich zu den erfindungsgemäß zur Verbesserung der Dispergier- und/oder Emulgierwirkung, Minimierung der Schrumpfung der Formteile und Erhöhung des mechanischen Eigenschaftsniveaus der hergestellten Polyisocyanat-Polyadditionsprodukte eingesetzten Copolymerisaten können der Reaktionsmischung gegebenenfalls auch noch andere Hilfsmittel und/oder Zusatzstoffe (e) einverleibt werden. Genannt seien beispielsweise oberflächenaktive Substanzen, Füllstoffe, Flammschutzmittel, Farbstoffe, Pigmente, Trennmittel, Hydrolyseschutzmittel, fungistatisch und bakteriostatisch wirkende Substanzen.
   Als oberflächenaktive Substanzen seien beispielsweise genannt: Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Die oberflächenaktiven Substanzen werden üblicherweise in Mengen von 0,01 bis 5 Gew.-Teilen, bezogen auf 100 Gew.-Teile der Komponente (b), angewandt.
   Als Füllstoffe, insbesondere verstärkend wirkende Füllstoffe, sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate, wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid und Zinksulfid sowie Glaskugel und Kurzglasfasern. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit. Als organische Füllstoffe kommen beispielsweise in Betracht: Kohle, z.B. Ruß, Melamin, Kollophonium, Cyclopentadienylharze, Melamin-Formaldehyd und Harnstoff-Formaldehyd-Kondensate.
   Die anorganischen und organischen Füllstoffe, die einzeln oder als Gemische verwendet werden können, werden der Reaktionsmischung vorteilhafterweise in Mengen von 0,5 bis 50 Gew.%, vorzugsweise 1 bis 40 Gew.%, bezogen auf das Gewicht der Komponenten a) bis c), einverleibt.
   Geeignete Flammschutzmittel sind beispielsweise Trikresylphosphat, Tris-(2-chlorethyl)phosphat, Tris-(2-chlorpropyl)phosphat und Tris-(2,3-dibrompropyl)phosphat und Tetrakis(2-chlorethyl)ethylendiphosphat.
   Außer den bereits genannten halogensubstituierten Phosphaten können auch anorganische Flammschutzmittel, wie Antimontrioxid, Arsenoxid, Ammoniumphoshat, Ammoniumsulfat, Aluminiumoxidhydrat und roter Phosphor sowie Isocyanursäurederivate, wie Melamin, Dicyan-diamid und Guanidinsalze, z.B. Guanidincarbonat, zum Flammfestmachen der Polyisocyanat-Polyadditionsprodukte verwendet werden. Im allgemeinen hat es sich als vorteilhaft erwiesen, 5 bis 50 Gew.-Teile, vorzugsweise 5 bis 25 Gew.-Teile der genannten Flammschutzmittel für jeweils 100 Gew.-Teile der Mischung aus den Aufbau-Komponenten (a) bis (c) zu verwenden.
   Als geeignete Trennmittel, vorzugsweise innere Trennmittel, die in Mengen von 0,05 bis 2 Gew.%, bezogen auf die Komponente (b) eingesetzt werden, seien beispielsweise genannt: Stearylstearat, Carbonsäureester und/oder Carbonsäureamide, hergestellt durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen mit Molekulargewichten von 60 bis 400, gemäß EP-A-153 639 oder Stearaten von Alkali-, Erdalkali- oder anderen Metallen, wie sie beispielsweise in US-A-4 519 965, EP-A-218 175, EP-A-240 715 oder DE-A-36 31 842 beschrieben werden.
   Nähere Angaben über die obengenannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Band VII, Polyurethane 1. und 2. Auflage, Carl-Hanser-Verlag, München 1966 und 1983, zu entnehmen.
f) Als Treibmittel zur Herstellung der zelligen Polyisocyanat-Polyadditionsprodukte, vorzugsweise der Schaumstoffe und zelligen Elastomeren, werden niedrig-siedende, in der Komponente (b) lösliche oder emulgierbare Flüssigkeiten verwendet, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrig-siedenden Flüssigkeiten untereinander und/oder mit anderen substituierten oder unsubstituierten Kohlenwasserstoffen können verwendet werden.
   Als Treibmittel eignet sich auch Wasser, das mit den Polyisocyanaten unter Bildung von Kohlendioxid und Polyharnstoffgruppen reagiert und dadurch die Druckfestigkeit der Endprodukte beeinflußt. Da die in den Polyester- und Polyether-polyolen als Nebenprodukt enthaltene Wassermenge meist ausreicht, bedarf es vielfach keiner separaten Wasserzugabe. Sofern jedoch der Polyurethan-Formulierung zusätzlich Wasser einverleibt werden muß, wird dieses üblicherweise in Mengen von 0,05 bis 4 Gew.%, vorzugsweise von 0,5 bis 3,0 Gew.%, bezogen auf das Gewicht der Aufbaukomponente b) verwendet.
   Die zweckmäßigste Menge an niedrigsiedender Flüssigkeit zur Herstellung der zelligen Polyisocyanat-Polyadditionsprodukte hängt ab von der Dichte, die man erreichen will und der gegebenenfalls eingesetzten Wassermenge. Im allgemeinen liefern Mengen von 1 bis 15 Gew.-Teilen; vorzugsweise von 2 bis 6 Gew.-Teilen, bezogen auf 100 Gew.-Teile der Komponente (b) zufriedenstellende Ergebnisse.

Zur Herstellung der urethangruppenhaltigen Schaumstoffe und der urethan- und/oder harnstoffgruppenhaltigen, kompakten oder zelligen Elastomeren werden die organischen und/oder modifizierten organischen Polyisocyanate (a) mit den höhermolekularen Verbindungen mit mindestens 2 reaktiven Wasserstoffatomen (b) und vorzugsweise Kettenverlängerungs- und/oder Vernetzungsmittel (c) in solchen Mengen zur Umsetzung gebracht, daß das Verhältnis von reaktiven Wasserstoffatomen zu NCO-Gruppen 1:0,8 bis 2,5, vorzugsweise 1:0,9 bis 1,2 und insbesondere ungefähr 1:1 beträgt.

Zur Herstellung von Urethan- und Isocyanuratgruppen enthaltenden Schaumstoffe werden die Aufbaukomponenten (a), (b) und gegebenenfalls (c) in solchen Mengen eingesetzt, daß das Verhältnis von NCO-Gruppen zu reaktiven Wasserstoffatomen von 3 bis 60:1, vorzugsweise 3 bis 10:1 beträgt.

Die Urethangruppen oder Urethan- und Isocyanuratgruppen enthaltende Schaumstoffe und urethan- und/oder harnstoffgruppenhaltigen kompakten oder zelligen Elastomeren können in an sich bekannter Weise nach dem Prepolymer-, Semiprepolymer- oder one shot-Verfahren hergestellt werden. Hierzu mischt man die Aufbaukomponenten (a), (b), (d) und (e) und gegebenenfalls (c) und/oder (f) intensiv in den genannten Mengenverhältnissen bei Temperaturen von 0 bis 60°C, vorzugsweise 15 bis 40°C und läßt danach die Reaktionsmischung im offenen oder nach dem Befüllen geschlossenen Formwerkzeugen aufschäumen. Bei Verwendung einer Mischvorrichtung mit mehreren Zulaufdüsen können die Aufbaukomponenten als Einzelstoffe zugeführt und in der Mischkammer intensiv vermischt werden. Als besonders zweckmäßig hat es sich jedoch erwiesen, nach dem sogenannten Zweikomponenten-Verfahren zu arbeiten und die höhermolekularen Verbindungen mit mindestens 2 reaktiven Wasserstoffatomen (b), Katalysatoren (d), Hilfsmittel und/oder Zusatzstoffe (e) und gegebenenfalls Kettenverlängerungs- und/oder Vernetzungsmittel (c) und/oder Treibmittel (f) zu der Komponente A zu vereinigen und als Komponente B die organischen und/oder modifizierten organischen Polyisocyanate zu verwenden. Vorteilhaft ist hierbei, daß nur zwei Komponenten gelagert und vor der Verarbeitung gemischt werden müssen.

Die nach dem beschriebenen Verfahren hergestellten Schaumstoffe besitzen bei freier Aufschäumung Dichten von 0,015 bis 0,5 g/cm³, vorzugsweise von 0,025 bis 0,3 g/cm³. Die Schaumstoffe finden beispielsweise Verwendung als Sitzkissen für Möbel oder Verkehrsmittel, Matratzen, Sprungmatten, zur Auskleidung oder Beschichtung von Formteilen sowie für Isolierzwecke.

Die gegebenenfalls verdichteten zelligen Elastomeren besitzen Dichten von 0,15 bis 1,1 g/cm³, vorzugsweise von 0,3 bis 0,8 g/cm³ und finden z.B. Verwendung als Kopfstützen, Armlehnen, Lenkräder in Verkehrsmitteln sowie als Computergehäuse und Fensterrahmen.

Die kompakten Elastomeren weisen Dichten von 0,9 bis 1,4 g/cm³, vorzugsweise von 1,0 bis 1,2 g/cm³ auf und eignen sich z.B. als Rammschutzleisten, Kotflügel, Radkappen und Spoiler für Automobile.

### Beispiele

Die in den Beispielen beschriebenen Copolymerisate wurden in einer üblichen, für Reaktionen unter Druck oder vermindertem Druck geeigneten Polymerisationsapparatur, ausgestattet mit Rührer, Rückflußkühler, Inertgasanschluß, Zulaufgefäßen, Kontrollthermometer und einer Vorrichtung zur Beheizung oder Kühlung, hergestellt.

Die Bestimmung des K-Werts erfolgte nach DIN 53726 in 0,5 gew.%iger Lösung in Isopropanol bei 25°C.

In den Beispielen wurden als olefinisch ungesättigte Polyesteralkohol- und Polyoxyalkylenalkoholaddukte die folgenden Monomeren verwendet:
- A1:: 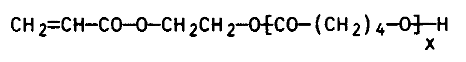 Gemisch aus Addukten mit x gleich 1 bis 5 Einheiten. Handelsprodukt Tone® TM-100 Acrylat der Firma Union Carbide Corp.
- A2:: 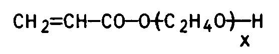 mit der Hydroxylzahl 18
- A3:: 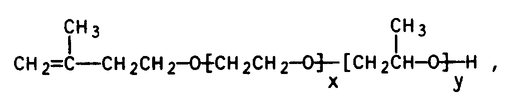 wobei x ungefähr 103 und y ungefähr 3 sind. Die Hydroxylzahl ist 11.
- A4:: 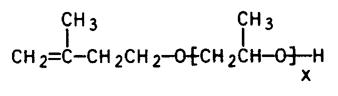 mit einer Hydroxylzahl von 22.
- A5:: 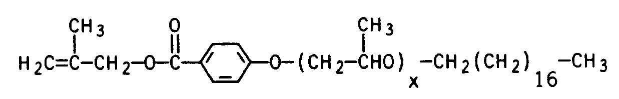 x = ungefähr 103
- A6:: 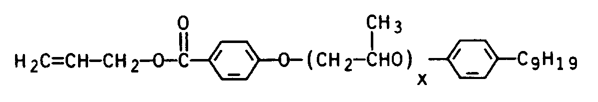 x = ungefähr 80

### Herstellung der Copolymerisate

### Beispiel 1

Zu einer unter schwachem Rückfluß siedenden Mischung aus
150 g A3,
30 g Isopropanol,
55 g eines Gemisches I, bestehend aus
200 g N-Vinyl-pyrrolidon,
150 g Vinylacetat und
250 g Isopropanol und
5 g eines Gemisches II, bestehend aus
5 g tert.-Butyl-per-2-ethyl-hexanoat und
32 g Isopropanol
fügte man im Verlauf von 3 Stunden gleichzeitig unter Rühren die restlichen 545 g des Gemisches I und 32 g des Gemisches II. Anschließend wurde 3 Stunden unter Rückflußtemperatur weitergerührt und danach der Reaktionsmischung innerhalb eines Zeitraums von einer Stunde 20 g einer Lösung aus 5 g tert.-Butyl-per-2-ethylhexanoat und 15 g Isopropanol einverleibt.

Man erhielt ein Copolymerisat C1 mit einem K-Wert von 17.

### Beispiel 2

Man verfuhr analog den Angaben des Beispiels 1, verwendete jedoch anstelle von A3 150 g A2 und anstelle des Gemisches I ein Gemisch, bestehend aus 350 g N-Vinyl-pyrrolidon und 250 g Isopropanol.

Man erhielt ein Copolymerisat C2 mit einem K-Wert von 23.

### Beispiel 3

Man verfuhr analog den Angaben des Beispiels 1, verwendete jedoch anstelle von A3 100 g A1.

Man erhielt ein Copolymerisat C3 mit einem K-Wert von 20.

### Beispiel 4

Eine Mischung aus
180 g A3,
20 g eines Gemisches I, bestehend aus
140 g N-Vinyl-pyrrolidon und
200 g Isopropanol, und
6 g eines Gemisches II, bestehend aus
6 g tert.-Butyl-per-2-ethyl-hexanoat und
80 g Isopropanol
wurden unter Rühren auf eine Temperatur erwärmt, bei welcher schwacher Rückfluß eintrat.

Im Verlauf von 2,5 Stunden wurden der Mischung gleichzeitig unter Rühren die restlichen 320 g des Gemisches I und 80 g des Gemisches II hinzugefügt und noch 1 Stunde unter schwacher Rückflußtemperatur weiterpolymerisiert. Anschließend wurden innerhalb von 30 Minuten 36 g einer Mischung aus 6 g tert.-Butyl-per-2-ethylhexanoat und 30 g Isopropanol der Reaktionsmischung einverleibt und die Polymerisation in einer Stunde zu Ende geführt.

Man erhielt ein Copolymerisat C4 mit einem K-Wert von 12.

### Beispiele 5 bis 7

### Herstellung einer Dispersion des Copolymerisats C4 in Ethylenglykol

Zu der gemäß Beispiel 4 hergestellten Lösung des Copolymerisats C4 in Isopropanol fügte man 332 g Ethylenglykol und trennte das Isopropanol durch fraktionierte Destillation unter vermindertem Druck ab. Die erhaltene Dispersion wurde mit Ethylenglykol auf einen Copolymerisat C4-Gehalt von 50 Gew.% eingestellt.

Zur Herstellung homogener Mischungen und zur Bestimmung ihrer Stabilität wurden einer Mischung aus einem Polyoxipropylen(80 Gew.%)-polyoxiethylen(20 Gew.%)-triol mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyoxipropylenaddukt - im folgenden abgekürzt Lu 2042 genannt - und Ethylenglykol unterschiedliche Mengen der oben beschriebenen Copolymerisat C4/Ethylenglykol-Dispersion - abgekürzt C4-Et-D. genannt - einverleibt. Ermittelt wurde die Homogenität nach 6 Wochen Lagerzeit.

| Beispiel | Lu 2042 Gew.-Teile | Ethylenglykol Gew.-Teile | Mischung Gew.-Teile | C4-Et-D Gew.-Teile | Homogenität |
|---|---|---|---|---|---|
| 5 | 70 | 30 | 100 | 0 | inhomogen Ausbildung zweier Phasen |
| 6 | 70 | 30 | 95 | 5 | homogene, stabile Lösung |
| 7 | 70 | 30 | 99 | 1 | homogene, stabile Lösung |

### Beispiel 8

99,5 Gew.-Teile eines Gemisches, bestehend aus
27,9 Gew.-Teilen eines Polyoxipropylen(86 Gew.%)-polyoxiethylen(14 Gew.%)-triols mit einer Hydroxylzahl von 28, hergestellt durch Polyaddition von 1,2-Propylenoxid an Glycerin und anschließender Polyaddition von Ethylenoxid an das erhaltene Glycerin-polyoxipropylenaddukt,
27,9 Gew.-Teilen eines Polyoxipropylen(87 Gew.%)-polyoxiethylen(13 Gew.%)-triols mit einer Hydroxylzahl von 35, hergestellt durch Polyaddition von 1,2-Propylenoxid an Trimethylolpropan und anschließender Polyaddition von Ethylenoxid an das erhaltene Trimethylolpropanpolyoxipropylenaddukt und
6,3 Gew.-Teilen Ethylenglykol,
wurden 0,5 Gew.-Teile der C4-Et-D einverleibt.

Die Mischung war nach 6 Wochen noch homogen und zeigte keinerlei Anzeichen einer Phasentrennung.

### Beispiel 9

99,5 Gew.-Teilen eines Gemisches, bestehend aus
87 Gew.-Teilen eines Polyoxipropylen(81,5 Gew.%)-polyoxiethylen (18,5 Gew.%)-triols mit der Hydroxylzahl von 29, hergestellt durch Polyaddition von 1,2-Propylenoxid an Glycerin und anschließende Polyaddition von Ethylenoxid an das erhaltene Glycerin-polyoxypropylenaddukt,
12,2 Gew.-Teilen eines Polyoxipropylen(80 Gew.%)-polyoxiethylen(20 Gew.%)-triols mit der Hydroxylzahl von 26, hergestellt unter Verwendung von Trimethylolpropan als Startermolekül,
5,3 Gew.-Teilen eines Polyoxipropylen(86,5 Gew.%)-polyoxiethylen-(13,5 Gew.%)-triols mit der Hydroxylzahl von 35, hergestellt unter Verwendung von Glycerin als Startermolekül und
8,1 Gew.-Teilen Butandiol-1,4
wurden 0,5 Gew.-Teile der C4-Et-D einverleibt.

Die erhaltene Mischung zeigte nach einer Lagerzeit von 6 Monaten keinerlei Phasentrennung.

### Beispiel 10

Eine Mischung aus
180 g A3 und
20 g einer Lösung I, bestehend aus
140 g N-Vinyl-pyrrolidon und
160 g Isopropanol
wurde auf 110°C unter Rühren erwärmt. Der Mischung wurden
6 g einer Lösung II, bestehend aus
6 g tert.-Butylperoctoat und
64 g Isopropanol
einverleibt und die Reaktionsmischung 15 Minuten anpolymerisiert.

Nach dieser Zeit wurden im Verlauf von 2 Stunden der Mischung unter Rühren bei 110°C gleichzeitig die restlichen 380 g der Lösung I und 64 g der Lösung II einverleibt und weitere 2 Stunden polymerisiert.

Nach Zugabe von 23 g einer Lösung III, bestehend aus 6 g tert.-Butylperoctoat und 40 g Isopropanol, wurden unter den genannten Reaktionsbedingungen weitere 1,5 Stunden polymerisiert und nach dieser Zeit die restlichen 23 g der Lösung III der Reaktionsmischung einverleibt.

Nach einer Nachpolymerisationszeit von 2 Stunden ließ man die Copolymerisatlösung in ca. 12 Stunden auf Raumtemperatur abkühlen.

Man erhielt ein Copolymerisat C5 mit einem K-Wert von 17,5.

### Beispiel 11

Man verfuhr analog den Angaben des Beispiels 10, verwendete jedoch anstelle des N-Vinyl-pyrrolidons eine Mischung aus 120 g N-Vinylpyrrolidon und 20 g Acrylsäure.

Man erhielt ein Copolymerisat C6 mit einem K-Wert von 19,8.

### Beispiel 12

Man verfuhr analog den Angaben des Beispiels 10, verwendete jedoch anstelle des N-Vinyl-pyrrolidons eine Mischung aus 12 g N-Vinylpyrrolidon und 40 g N-Diacetonacrylamid.

Man erhielt ein Copolymerisat C7 mit einem K-Wert von 15,0.

### Beispiele 13 bis 16

Herstellung von Dispersionen der Copolymerisate C5 bis C7 in einem mit Glycerin gestarteten Polyoxipropylen(86 Gew.%)-polyoxiethylen(14 Gew.%)-triols der Hydroxylzahl 28, abgekürzt Lu 2040 genannt.

Zu den gemäß den Beispielen 10 bis 12 hergestellten Copolymerisat-C5- bis -C7-lösungen wurden die im folgenden genannten Mengen Lu 2040 hinzugefügt und anschließend das Isopropanol durch fraktionierte Destillation unter vermindertem Druck abdestilliert. Die erhaltenen Dispersionen wurden mit Lu 2040 auf einen Copolymerisatgehalt von 50 Gew.% eingestellt.

| | Lu 2040 [g] |
|---|---|
| Copolymerisat C5-dispersion | 298 |
| Copolymerisat C6-dispersion | 363 |
| Copolymerisat C7-dispersion | 358 |

### Herstellung stabiler Melamin-Polyether-polyol-dispersionen

Zu einer Mischung aus Lu 2040 und Melamin fügte man die obengenannten Copolymerisat C5- bis C8-Lu 2040-dispersionen. Die verwendeten Mengen und die ermittelte Stabilität der erhaltenen Melamin/Lu 2040-Dispersionen nach einer 5-wöchigen Lagerung sind in der folgenden Tabelle zusammengefaßt.

| Beispiel | Lu 2040 Gew.-Teile | Melamin* Gew.-Teile | Copolymerisat/Lu 2040-dispersion | | Stabilität |
|---|---|---|---|---|---|
| | | | Art | Gew.-Teile | |
| 13 (Vergleich) | 52 | 48 | - | - | entmischt |
| 14 | 51 | 48 | C5 | 1 | stabil |
| 15 | 51 | 48 | C6 | 1 | stabil |
| 16 | 51 | 48 | C7 | 1 | stabil |

| | | | | | |
|---|---|---|---|---|---|
| * Melamin U 24 der BASF Aktiengesellschaft | | | | | |

### Beispiel 17

### Herstellung einer Dispersion eines inneren Trennmittels in einem Polyether-polyol

Das innere Trennmittel wurde hergestellt analog den Angaben der DE-A-26 31 842 und bestand aus
31 Gew.-Teilen eines Ketimin auf der Grundlage eines Polyoxialkylenpolyamins (®Jeffamin D 230), Cyclohexanon und Methylisobutylketon,
8,0 Gew.-Teilen ölsäure und
61,0 Gew.-Teilen Zinkstearat.

Zu 1239 g eines auf 110°C erwärmten Polyoxipropylen(86 Gew.%)-polyoxiethylen(14 Gew.%)-triols mit einer Hydroxylzahl von 28, hergestellt durch Polyaddition von 1,2-Propylenoxid an Glycerin und anschließende Polyaddition von Ethylenoxid an das erhaltene Glycerin-polyoxipropylenaddukt wurden unter Rühren
21 g der Copolymerisat C6-Lu 2040-Dispersion, hergestellt gemäß den Angaben der Beispiele 11 und 13 bis 16 und danach 840 g des oben beschriebenen inneren Trennmittels hinzugefügt. Die Mischung wurde bis zur Bildung einer klaren Lösung auf 120°C erwärmt und anschließend unter heftigem Rühren über einen Zeitraum von 6 Stunden auf Raumtemperatur abkühlen gelassen.

Man erhielt eine feinteilige, gut fließfähige Dispersion, die mindestens 6 Monate lagerstabil war.

## Patentansprüche

1. Copolymerisate mit einem K-Wert von 5 bis 80, gemessen als 0,5 gew.%ige Lösung in Isopropanol bei 25°C, hergestellt in Gegenwart von Polymerisationsinitiatoren durch radikalische Polymerisation von
A) 20 bis 80 Gew.%, bezogen auf das Gesamtgewicht der Monomeren (A) und (B), mindestens eines olefinisch ungesättigten Polyoxyalkylenalkohol- oder Polyesteralkoholaddukts,
B) 80 bis 20 Gew.%, bezogen auf das Gesamtgewicht der Monomeren (A) und (B), mindestens eines Vinylmonomeren ausgewählt aus der Gruppe N-Vinyl-formamid, N-Vinyl-2-pyrrolidon, N-Vinyl-2-piperidon,, N-Vinyl-2-caprolactam, N-Vinyl-imidazol, N-Vinyl-2-ethylenharnstoff und N-Vinyl-2-propylenharnstoff,
C ) 0 bis 10 Gew.-Teilen, bezogen auf 100 Gew.-Teile der Monomeren (A) und (B), mindestens einer α,β-monoolefinisch ungesättigten Säure und
D ) 0 bis 30 Gew.-Teilen, bezogen auf 100 Gew.-Teile der Monomeren (A) und (B), mindestens eines olefinisch ungesättigten Carbonsäureamids und/oder -esters und/oder Styrol.

2. Copolymerisate nach Anspruch 1, dadurch gekennzeichnet, daß die olefinisch ungesättigten Polyoxyalkylenalkohol- oder Polyesteralkoholaddukte (A) eine der Formeln (I) bis (VIII) aufweisen: 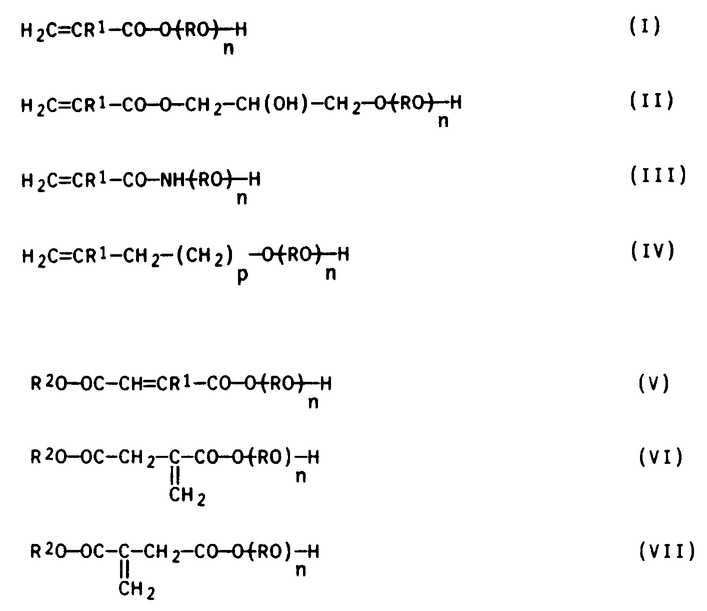 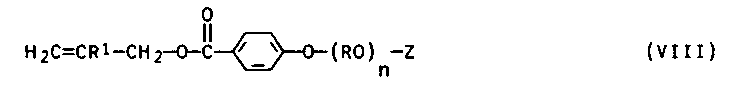 in denen bedeuten:
R¹ und R² jeweils ein Wasserstoffatom oder eine lineare oder verzweigte Alkylgruppe mit 1 bis 4 Kohlenstoffatomen, wobei die Reste R¹ und R² gleich oder verschieden sind,
R gleiche oder verschiedene Brückenglieder der Formeln
-CH₂CH₂- , -CH₂-CH(CH₃)- , 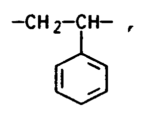 -CH₂CH₂CH₂CH₂-
oder -CO-(CH₂)ₘ-O-, wobei m eine ganze Zahl von 1 bis 10 ist,
Z ein Wasserstoffatom, einen linearen oder verzweigten Alkylrest mit 1 bis 24 Kohlenstoffatomen, einen Arylrest oder einen alkylsubstituierten Arylrest,
n eine ganze Zahl von 2 bis 200 und
p eine ganze Zahl von 1 bis 18.

3. Copolymerisate nach Anspruch 1, dadurch gekennzeichnet, daß die α,β-monoolefinisch ungesättigte Säure (C) ausgewählt ist aus der Gruppe Acrylsäure, Methacrylsäure, Maleinsäure, Fumarsäure, Itaconsäure, Vinylsulfonsäure und Vinylphosphonsäure.

4. Copolymerisate nach Anspruch 1, dadurch gekennzeichnet, daß die olefinisch ungesättigten Carbonsäureamide oder -ester (D) ausgewählt sind aus der Gruppe der N,N-Dialkylacrylamide, N,N-Dialkylmethacrylamide, N-Alkylacrylamide, N-Alkylmethacrylamide mit 1 bis 12 Kohlenstoffatomen im Alkylrest, Acrylamid, Methacrylamid, Vinylcarbonsäureester mit 1 bis 20 Kohlenstoffatomen im Alkanoylrest, Alkylacrylate, Alkylmethacrylate, Hydroxyalkylacrylate und Hydroxyalkylmethacrylate mit 1 bis 24 Kohlenstoffatomen im Alkylrest oder 2 bis 10 Kohlenstoffatomen in der Hydroxyalkylgruppe.

5. Copolymerisate nach einem der Ansprüche 1 bis 4, hergestellt durch radikalische Polymerisation von
A) 20 bis 80 Gew.%, bezogen auf das Gesamtgewicht der Monomeren (A) und (B), mindestens eines olefinisch ungesättigten Polyoxyalkylenalkohol- oder Polyesteralkoholaddukts,
B) 80 bis 20 Gew.%, bezogen auf das Gesamtgewicht der Monomeren (A) und (B), mindestens eines Vinylmonomeren ausgewählt aus der Gruppe N-Vinyl-formamid, N-Vinyl-2-pyrrolidon, N-Vinyl-2-piperidon,, N-Vinyl-2-caprolactam, N-Vinyl-imidazol, N-Vinyl-2-ethylenharnstoff und N-Vinyl-2-propylenharnstoff,
C) 0,1 bis 10 Gew.-Teilen, bezogen auf 100 Gew.-Teile der Monomeren (A) und (B), einer olefinisch ungesättigten Säure, ausgewählt aus der Gruppe Acrylsäure, Methacrylsäure, Maleinsäure, Fumarsäure, Itaconsäure, Vinylsulfonsäure und Vinylphosphonsäure und
D) 0 bis 30 Gew.-Teilen, bezogen auf 100 Gew.-Teile der Monomeren (A) und (B), mindestens eines olefinisch ungesättigten Carbonsäureamids und/oder -esters und/oder Styrol.

6. Verwendung der Copolymerisate nach einem der Ansprüche 1 bis 5 als Dispergierhilfsmittel und/oder Emulgierhilfsmittel in Formulierungen oder deren Teilmischungen zur Herstellung von Polyisocyanat-Polyadditionsprodukten und/oder als Additiv zur Verbesserung der mechanischen Eigenschaften von aus diesen Formulierungen hergestellten Polyisocyanat-Polyadditionsprodukten.

7. Verwendung der Copolymerisate nach einem der Ansprüche 1 bis 5 als Additiv in Formulierungen zur Herstellung von praktisch schrumpffreien Formteilen auf der Grundlage von Urethangruppen enthaltenden Elastomeren oder Schaumstoffen.

8. Verwendung der Copolymerisate nach Anspruch 5 als Dispergierhilfsmittel zur Herstellung lagerstabiler Dispersionen aus mindestens einem pulverigen Feststoff, vorzugsweise Melamin, und mindestens einem Polyester- und/oder Polyether-polyol.

9. Verfahren zur Herstellung von Polyisocyanat-Polyadditionsprodukten durch Umsetzung von
a) organischen Polyisocyanaten und/oder modifizierten organischen Polyisocyanaten mit
b) höhermolekularen Verbindungen mit mindestens 2 reaktiven Wasserstoffatomen und gegebenenfalls
c) Kettenverlängerungsmitteln und/oder Vernetzungsmitteln
in Gegenwart von
d) Katalysatoren,
e) Hilfsmitteln und/oder Zusatzstoffen sowie
in Gegenwart oder Abwesenheit von
f) Treibmitteln,
dadurch gekennzeichnet, daß man als Hilfsmittel und/oder Zusatzstoffe Copolymerisate nach einem der Ansprüche 1 bis 6 verwendet.

## Claims

1. A copolymer having a K value of from 5 to 80, measured as a 0.5 % strength by weight solution in isopropanol at 25°C, prepared in the presence of polymerization initiators by free-radical polymerization of
A) from 20 to 80 % by weight, based on the total weight of monomers (A) and (B), of at least one olefinically unsaturated polyoxyalkylene alcohol or polyester alcohol adduct,
B) from 80 to 20 % by weight, based on the total weight of monomers (A) and (B), of at least one vinyl monomer, selected from the group consisting of N-vinylfomamide, N-vinyl-2-pyrrolidone, N-vinyl-2-piperidone, N-vinyl-2-caprolactam, N-vinylimidazole, N-vinyl-2-ethyleneurea and N-vinyl-2-propyleneurea,
C) from 0 to 10 parts by weight, based on 100 parts by weight of monomers (A) and (B), of at least one α,β-monoolefinically unsaturated acid, and
D) from 0 to 30 parts by weight, based on 100 parts by weight of monomers (A) and (B), of at least one olefinically unsaturated carboximide and/or carboxylate and/or styrene.

2. A copolymer as claimed in Claim 1, wherein the olefinically unsaturated polyoxyalkylene alcohol or polyester alcohol adducts (A) have one of the formulae (I)
to (VIII) 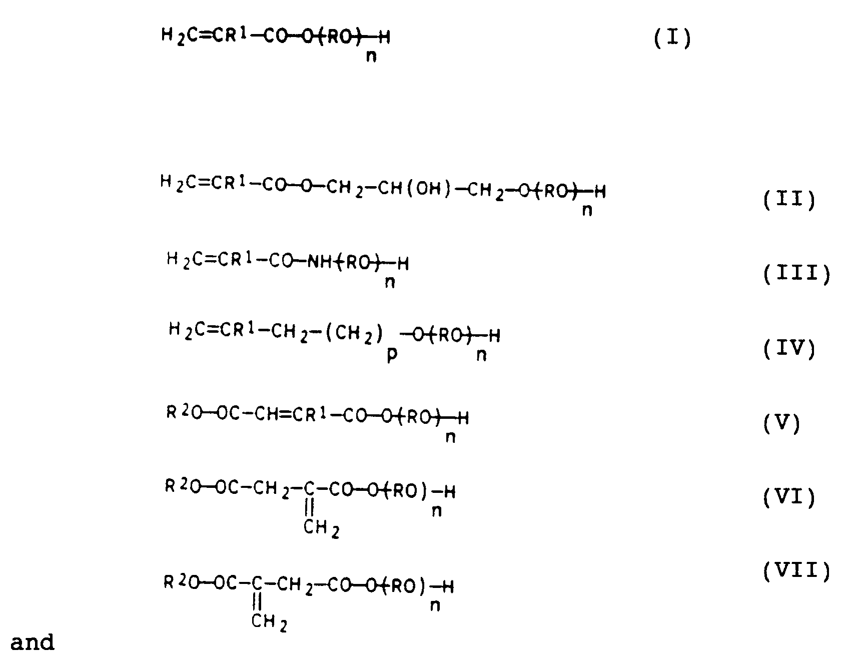 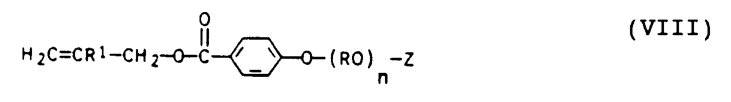 where
R¹ and R² are each hydrogen or linear or branched alkyl having 1 to 4 carbon atoms, R¹ and R² being identical or different,
R is a bridging member, in each case identical or different, of the formula
-CH₂CH₂- , -CH₂-CH(CH₃)- , 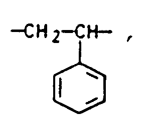 -CH₂CH₂CH₂CH₂-
or -CO-(CH₂)ₘ-O-, where m is an integer from 1 to 10,
Z is hydrogen, linear or branched alkyl having 1 to 24 carbon atoms, aryl or alkyl-substituted aryl,
n is an integer from 2 to 200 and
p is an integer from 1 to 18.

3. A copolymer as claimed in Claim 1, wherein the α,β-monoolefinically unsaturated acid (C) is selected from the group consisting of acrylic acid, methacrylic acid, maleic acid, fumaric acid, itaconic acid, vinylsulfonic acid and vinylphosphonic acid.

4. A copolymer as claimed in Claim 1, wherein the olefinically unsaturated carboximide or carboxylate (D) is selected from the group consisting of N,N-dialkylacrylamides, N,N-dialkylmethacrylamides, N-alkylacrylamides, N-alkylmethacrylamides having 1 to 12 carbon atoms in the alkyl moiety, acrylamide, methacrylamide, vinylcarboxylates having 1 to 20 carbon atoms in the alkanol moiety, alkyl acrylates, alkyl methacrylates, hydroxyalkyl acrylates and hydroxyalkyl methacrylates having 1 to 24 carbon atoms in the alkyl moiety or having 2 to 10 carbon atoms in the hydroxyalkyl group.

5. A copolymer as claimed in any one of Claims 1 to 4, prepared by free-radical polymerization of
A) from 20 to 80 % by weight, based on the total weight of monomers (A) and (B), of at least one olefinically unsaturated polyoxyalkylene alcohol or polyester alcohol adduct,
B) from 80 to 20 % by weight, based on the total weight of monomers (A) and (B), of at least one vinyl monomer, selected from the group consisting of N-vinylformamide, N-vinyl-2-pyrrolidone, N-vinyl-2-piperidone, N-vinyl-2-caprolactam, N-vinylimidazole, N-vinyl-2-ethyleneurea and N-vinyl-2-propyleneurea,
C) from 0.1 to 10 parts by weight, based on 100 parts by weight of monomers (A) and (B), of an olefinically unsaturated acid, selected from the group consisting of acrylic acid, methacrylic acid, maleic acid, fumaric acid, itaconic acid, vinylsulfonic acid and vinylphosphonic acid, and
D) from 0 to 30 parts by weight, based on 100 parts by weight of monomers (A) and (B), of at least one olefinically unsaturated carboximide and/or carboxylate and/or styrene.

6. The use of a copolymer as claimed in any one of Claims 1 to 5 as a dispersion assistant and/or emulsification assistant in formulations or component mixtures thereof for the preparation of polyisocyanate polyaddition products and/or as an additive for improving the mechanical properties of polyisocyanate polyaddition products prepared from these formulations.

7. The use of a copolymer as claimed in any one of Claims 1 to 5 as an additive in formulations for producing virtually shrinkage-free moldings based on urethane group-containing elastomers or foams.

8. The use of a copolymer as claimed in Claim 5 as a dispersion assistant for the preparation of long-shelf-life dispersions of at least one pulverulent solid, preferably melamine, and at least one polyester-polyol and/or polyether-polyol.

9. The process for the preparation of polyisocyanate polyaddition products by reacting
a) organic polyisocyanates and/or modified organic polyisocyanates with
b) relatively high-molecular weight compounds containing at least 2 reactive hydrogen atoms, and, if desired,
c) chain extenders and/or crosslinking agents,
in the presence of
d) catalysts,
e) assistants and/or additives
in the presence or absence of
f) blowing agents,
wherein the assistants and/or additives are copolymers as claimed in any one of Claims 1 to 6.

## Revendications

1. Copolymérisats d'un indice K de 5 à 80, mesuré à 25°C comme solution à 0,5 % en poids dans de l'isopropanol, préparés en présence d'initiateurs de polymérisation par polymérisation radicalaire de
(A) 20 à 80 % en poids, rapportés au poids total des monomères (A) et (B), d'au moins un produit d'addition de polyoxyalkylène-alcool ou polyester-alcool à insaturation oléfinique,
(B) 80 à 20 % en poids, rapportés au poids total des monomères (A) et (B), d'au moins un monomère vinylique choisi dans le groupe constitué de N- vinyl-formamide, N-vinyl-2-pyrrolidone, N-vinyl-2-pipéridine, N-vinyl-2-caprolactame, N-vinyl-imidazole, N-vinyl-2-éthylène-urée et N-vinyl-2-propylène-urée,
(C) 0 à 10 parties en poids, rapportées à 100 parties en poids des monomères (A) et (B), d'au moins un acide à insaturation α,β-monooléfinique et
(D) 0 à 30 parties en poids, rapportées à 100 parties en poids des monomères (A) et (B), d'au moins un amide et/ou ester d'acide carboxylique à insaturation oléfinique et/ou de styrène.

2. Copolymérisats selon la revendication 1, caractérisés par le fait que les produits d'addition de polyoxyalkylène-alcool ou polyester-alcool (A) à insaturation oléfinique répondent à une des formules (I) à (VIII) ci-après : 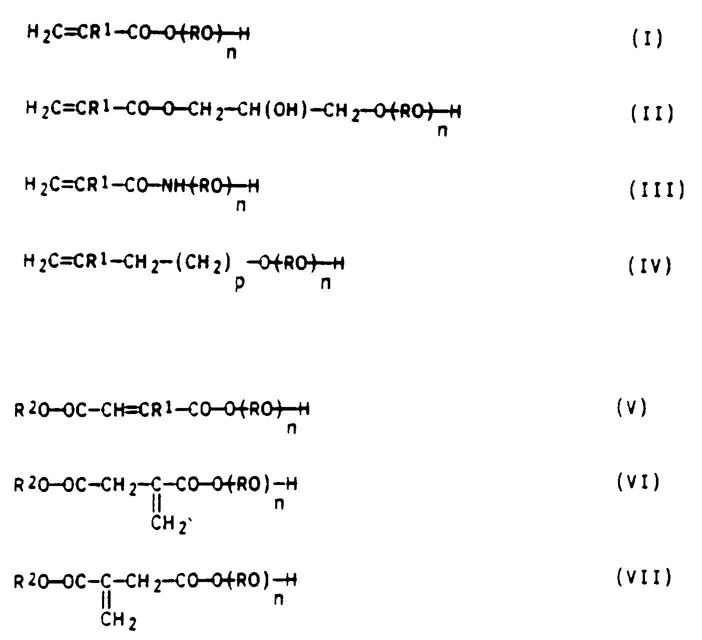 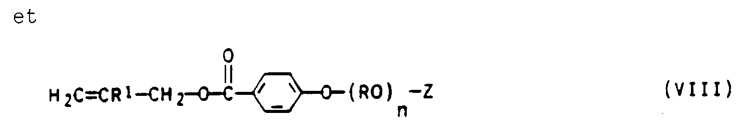 dans lesquelles
R1 et R2 représentent, chacun, un atome d'hydrogène ou un groupe alkyle linéaire ou ramifié à 1 à 4 atomes d'atome, les restes R1 et R2 étant identiques ou différents,
R représente des groupes pontaux identiques ou différents des formules
-CH₂CH₂- , -CH₂-CH(CH₃)- , 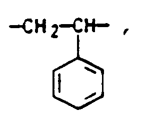 -CH₂CH₂CH₂CH₂-
ou -CO-(CH2)m-O-, m étant un nombre entier allant de 1 à 10,
Z représente un atome d'hydrogène, un reste alkyle linéaire ou ramifié à 1 à 24 atomes de carbone, un reste aryle ou un reste aryle substitué par alkyle,
n est un nombre entier allant de 2 à 200 et
p est un nombre entier allant de 1 à 18.

3. Copolymérisats selon la revendication 1, caractérisé par le fait que l'acide (C) à insaturation α,β-monooléfinique est choisi dans le groupe constitué d'acide acrylique, d'acide méthacrylique, d'acide maléique, d'acide fumarique, d'acide itaconique, d'acide vinylsulfonique et d'acide vinylphosphonique.

4. Copolymérisats selon la revendication 1, caractérisé par le fait que les amides ou esters d'acide carboxylique (D) à insaturation oléfinique sont choisis dans le groupe constitué des N,N-dialkylacrylamides, N,N-dialkylméthacrylamides, N-alkylacrylamides, M-alkylméthacrylamides à 1 à 12 atomes de carbone dans le reste alkyle, acrylamide, méthacrylamide, esters d'acide vinylcarboxylique à 1 à 20 atomes de carbone dans le reste alcanoyle, alkylacrylates, alkylméthacrylates, hydroxyalkylacrylates et hydroxyalkylméthacrylates à 1 à 24 atomes de carbone dans le reste alkyle ou 2 à 10 atomes de carbone dans le groupe hydroxyalkyle.

5. Copolymérisats selon l'une des revendications 1 à 4, préparés par polymérisation radicalaire de
(A) 20 à 80 % en poids, rapportés au poids total des monomères (A) et (B), d'au moins un produit d'addition de polyoxyalkylène-alcool ou polyester-alcool à insaturation oléfinique,
(B) 80 à 20 % en poids, rapportés au poids total des monomères (A) et (B), d'au moins un monomère vinylique choisi dans le groupe constitué de N- vinylformamide, N-vinyl-2-pyrrolidone, N-vinyl-2-pipéridine, N-vinyl-2-caprolactame, N-vinyl-imidazole, N-vinyl-2-éthylène-urée et N-vinyl-2-propylène-urée,
C) 0,1 à 10 parties en poids, rapportées à 100 parties en poids des monomères (A) et (B), d'un acide à insaturation oléfinique, choisi dans le groupe constitué d'acide acrylique, d'acide méthacrylique, d'acide maléique, d'acide fumarique, d'acide itaconique, d'acide vinylsulfonique et d'acide vinylphosphonique et
D) 0 à 30 parties en poids, rapportées à 100 parties en poids des monomères (A) et (B), d'au moins un amide et/ou ester d'acide carboxylique à insaturation oléfinique et/ou de styrène.

6. Utilisation des copolymérisats selon l'une des revendications 1 à 5 comme dispersants et/ou émulsifiants dans des formulations ou mélanges parties de celles-ci pour la préparation de produits de polyaddition de polyisocyanate et/ou comme additif pour améliorer les propriétés mécaniques des produits de polyaddition de polyisocyanate préparés à partir de ces formulations.

7. Utilisation des copolymérisats selon l'une des revendications 1 à 5 comme additif dans des formulations pour la préparation de pièces moulées pratiquement exemptes de retrait, à base d'élastomères ou de produits alvéolaires contenant des groupes uréthane.

8. Utilisation des copolymérisats selon la revendication 5 comme dispersant pour la préparation de dispersions stables au stockage, composées d'au moins une matière solide pulvérulente, de préférence mélamine, et d'au moins un polyester-et/ou polyéther-polyol.

9. Procédé de préparation de produits de polyaddition de polyisocyanate par réaction
a) de polyisocyanates organiques et/ou polyisocyanates organiques modifiés avec
b) des composés à poids moléculaire assez élevée, ayant au moins 2 atomes d'hydrogène réactifs, et éventuellement
c) des propagateurs de chaîne et/ou mouillants,
en présence
d) de catalyseurs,
e) d'auxiliaires et/ou d'additifs, ainsi
qu'en présence ou en l'absence
f) de gonflants,
caractérisé par le fait que l'on utilise, comme auxiliaires et/ou additifs, des copolymérisats selon l'une des revendications 1 à 6.
